# EUROPÄISCHE PATENTSCHRIFT

(11) **EP 2 564 268 B1**
(45) Veröffentlichungstag und Bekanntmachung des Hinweises auf die Patenterteilung: **18.07.2018**
(21) Anmeldenummer: 10793207.1
(22) Anmeldetag: 08.12.2010
(51) Int. Cl.: G03B 15/03, G03B 17/56, G03B 15/06

(54) **SYSTEM MIT BLITZLICHTREFLEKTORARM ZUR BEFESTIGUNG AN EINEM FOTOAPPARAT ODER EINER KAMERA**
SYSTEM WITH ARM FOR FLASH LIGHT REFLECTOR FOR FIXING TO A PHOTOGRAPHIC APPARATUS OR A CAMERA
SYSTÈME AVEC UN BRAS POUR REFLECTEUR POUR L'ECLAIRAGE FLASH POUR FIXATION À UN APPAREIL PHOTO OU CAMÉRA

(30) Priorität: 26.04.2010 DE 202010006106 U
(43) Veröffentlichungstag der Anmeldung: 06.03.2013
(73) Patentinhaber: Geller, Wolfgang-Peter, 21376 Garlstorf (DE)
(72) Erfinder: Geller, Wolfgang-Peter, 21376 Garlstorf (DE)
(74) Vertreter: Raffay & Fleck
(86) Internationale Anmeldenummer: PCT/EP2010/069187
(87) Internationale Veröffentlichungsnummer: WO 2011/134550

(56) Entgegenhaltungen:
- DE-A1- 3 248 200
- GB-A- 2 423 590
- US-A- 3 781 535
- US-A- 3 821 764
- US-A- 4 078 170
- US-A- 4 283 135
- US-A1- 2003 201 005

## Beschreibung

Die vorliegende Erfindung betrifft ein System mit einem Blitzlichtreflektorarm zur Befestigung an einem Fotoapparat sowie einem Blitzlichtgerät. Die Erfindung kann auch bei Film- und Videokameras eingesetzt werden.

Eine mit Bedacht gewählte Ausleuchtung eines Objektes ist Grundvoraussetzung für gelungene Fotografien. Hierzu können verschiedene Blitzgeräte und Reflektoren im Raum aufgestellt oder von Personen gehalten werden. Dies ist verhältnismäßig umständlich. Der Einsatz von Reflektoren in der Makrofotographie ist beispielsweise aus der US 4,283,135 bekannt, die eine Makroschiene mit Aufnahmen für Objekt, Hintergrund und Reflektoren offenbart.

Daher werden Blitzgeräte häufig mitten auf eine Kamera gesteckt. Dies bedingt, dass das Blitzlicht aus der gleichen Richtung kommt, aus der auch fotografiert wird, also entlang der Kameraachse ausgerichtet ist. Um die damit verbundenen Nachteile, wie zum Beispiel eine "flach" und kontrastarm wirkende Beleuchtung und den roten-Augen-Effekt, zu vermeiden, gibt es mehrere Lösungsansätze. So kann beispielsweise an der Kamera eine Vorrichtung angebracht werden, mit der das Blitzlicht seitlich neben der Kamera angeordnet an dieser befestigt ist, wie in der GB 2423590 offenbart. Zwar können so der Beleuchtungswinkel abgewandelt und verbesserte Ausleuchtungen erzielt werden, jedoch bringt dies den Nachteil mit sich, dass das Gewicht des Blitzes ebenfalls seitlich nach außen verlagert ist und eine recht aufwendige und stabile Haltekonstruktion erforderlich ist. Darüber hinaus wird beim Halten der Kamera durch das seitlich gelagerte Gewicht der stabilen Befestigung und des Blitzgeräts ein deutlich spürbares Drehmoment erzeugt, was zu Beeinträchtigungen beim Fotografieren führt. Wird eine Hand zur Unterstützung des Gewichts neben der Kamera eingesetzt, kann sie nicht zur Bedienung des Fotoapparats genutzt werden. Des Weiteren induziert dies eine sehr asymmetrische Handhaltung. Nachteilig wirkt sich dabei ebenfalls aus, dass die Lichtmessung durch das Blitzgerät nun ebenfalls aus einer seitlichen Richtung erfolgt und somit die Ausleuchtung für Fotographien aus der Richtung des Fotoapparates nicht optimal gesteuert werden kann. Des Weitern muss der Fotoapparat, um die Automatikfunktionen zu erhalten, mittels eines Kabels oder einer teueren und aufwendigen Remote-Steuerung mit dem Blitzgerät verbunden werden. Darüber hinaus verlagert sich der Schwerpunkt der Kamera, was zu einem deutlich schlechteren Handling führt.

Alternativ dazu können auf einen mittig auf einen Fotoapparat aufgesteckten Blitz diverse Vorrichtungen montiert werden, die das Licht streuen, reflektieren oder aufzuweichen.

Aus der DE 32 48 200 ist ein System bekannt, das zwei Blitzgeräte umfasst, wobei ein schwenkbarer Arm und ein darauf befindliches Blitzgerät ein Teil des Systems bildet, wobei eine direkte und eine indirekte Belichtung stattfinden soll.

So ist es beispielsweise aus der US 4,078,170 bekannt einen Reflektor zusammen mit einem Blitzgerät an einer stabilen Konstruktion weit oberhalb der Kamera zu positionieren. Auch dies bringt die genannten Nachteile bezüglich des Gewichts und der Gewichtsverteilung mit sich. Darüber hinaus sind die gezeigten Anordnungen so gewählt, dass eine Belichtungsmessung durch das Blitzgerät nicht möglich ist.

Des Weiteren kann auch indirekt über Raumdecken oder Wände geblitzt werden. All diese Lösungsansätze bedingen einen relativ hohen Lichtverlust und eine vergleichsweise unkontrollierte Beleuchtungssituation.

Aufgabe der Erfindung ist es somit ein System anzugeben, das eine gezielte Beleuchtung aus einer von der Richtung, aus der fotografiert wird, abweichenden Richtung ermöglicht und gleichzeitig keine aufwendigen Maßnahmen bezüglich der Blitzsteuerung erfordert, mit verhältnismäßig wenig Lichtleistung auskommt und den bereits vom Hersteller ausgewählten Schwerpunkt der Kamera nicht weiter beeinflusst.

Diese Aufgabe wird gelöst durch einen System aus Kamera und Blitzlichtgerät gemäß Anspruch 1, aufweisend einen Befestigungsarm, der mit Hilfe eines Befestigungsmittels an dem Stativgewinde befestigt ist und Mittel zur Befestigung eines Reflektionselementes aufweist, wobei der Reflektionsarm so ausgelegt ist, dass im am Fotoapparat festgelegten Zustand das Reflektionsmittel seitlich neben dem Fotoapparat positionierbar ist. Darüber hinaus weist das System ein Blitzlichtgerät auf.

Das Blitzlichtgerät weist einen Belichtungssensor auf, der nach Vorne, also entlang der Kameraachse misst. Darüber hinaus weist das Blitzlichtgerät ein Lampengehäuse auf, dass zur Abgabe von Licht zur Seite der Kamera, also in der Regel in etwa 90° zur Kameraachse ausgebildet ist. Unter einer Lichtabgabe zur Seite sind auch Winkel von 45° bis 135°, insbesondere von 60° bis 120° zur Kameraachse zu verstehen.

Unter einem Lampengehäuse ist jede Vorrichtung zur gerichteten Lichtabgabe zu verstehen. Dabei wird das Licht in der Regel in einen definierten Raumausschnitt, insbesondere als Lichtkegel abgestrahlt.

Durch die Anordnung eines Reflektionsmittels seitlich neben der Kamera wird es ermöglicht, den Blitz mittig auf die Kamera mit Belichtungssensor ausgerichtet entlang der Kameraachse aufzusetzen und das Licht dann seitlich in Richtung des Reflektionsmittels auszurichten, so dass das Licht vom Blitzlichtgerät über das Reflektionsmittel auf das auszuleuchtende Objekt geleitet wird. Dadurch kann eine seitliche Beleuchtungssituation erzeugt werden. Als Reflektionsmittel kommen beispielsweise ebene Flächen, Kartonplatten oder ähnliches in Frage. Allerdings können auch andere Gegenstände mit mehreren Reflektionsflächen oder strukturierten Oberflächen eingesetzt werden. So sind dreidimensionale Reflektionsgebilde vorstellbar um das Licht zu bündeln (konkave form) oder zu zerstreuen (konvexe Form).

Unter einer seitlichen Anordnung neben dem Fotoapparat ist jede Anordnung zu verstehen, die auch seitlich neben dem Fotoapparat ist. So kann das Reflektionsmittel seitlich neben dem Fotoapparat aber auf Höhe des Blitzes angeordnet werden oder aber auch von der allein seitlichen Position etwas nach vorne oder nach hinten verschwenkt werden, ohne dass die seitliche Anordnung im Sinne dieser Erfindung aufgegeben würde. Bevorzugt wird jedoch eine Anordnung die seitlich und nicht nach vorne oder hinten verschwenkt ist, in der Höhe jedoch variable oder auf Höhe des Blitzes angeordnet ist. Auch kann vorgesehen sein, dass das Reflektionsmittel höher, also auch höher als das Blitzlicht anzuordnen. Dies ermöglicht beispielsweise eine Beleuchtungssituation, wie von der Sonne hervorgerufen wird zu simulieren.

Eine seitliche Anordnung kann auch durch eine von der Kameraachse deutlich, insbesondere um mehr als 1° zur Seite hin abweichende Lichtachse, charakterisiert werden.

Der erfindungsgemäße Blitzlichtreflektorarm ermöglicht somit einen Lichteinfall von der Seite, weiter unten oder weiter oben und somit "interessantere" Beleuchtungssituationen ohne den Aufwand deutlich zu erhöhen. Dadurch wird auch der Rote-Augen-Effekt (die Pupillen der unter Blitzlicht fotografierten Personen werden rot gefärbt abgebildet) deutlich verringert oder vermieden. Der Blitzlichtreflektorarm und auch das Reflektionselement können verhältnismäßig leicht sein, beispielsweise aus Kunststoff ausgeführt sein, und beeinflussen somit den Schwerpunkt der Kamera kaum. Der erfindungsgemäße Blitzlichtreflektorarm ermöglicht den Blitz auch für seitliche Beleuchtungssituationen mittig auf dem Fotoapparat zu platzieren. Dadurch kann ein auf dem Fotoapparat vorgesehener Blitzschuh direkt verwendet werden und es müssen keine Kabel oder aufwendige Ansteuerungen für einen abseits des Fotoapparates platzierten Blitz vorgesehen werden. Auch kann die die Belichtungsmessung durch das Blitzlichtgerät aus der Kameraachse erfolgen.

Des Weiteren kann durch die Wahl eines entsprechend großen Reflektionselements die Größe der Lichtquelle, die bei üblichen Blitzgeräten sehr klein ist, auf einfache Weise vergrößert werden. Dadurch sind natürlichere Ausleuchtungen erzielbar und starke Schattenwürfe vermeidbar.

Darüber hinaus können zahlreiche verschiedene Reflektionselemente vorgehalten und verwendet werden. Dies erhöht die Flexibilität bezüglich der Beleuchtungssituation deutlich. So können beispielsweise ebene, raue, strukturierte, farblich verändernde, farbneutrale und/oder reflektierende, konkav, konvex, kegelförmig, tonnenförmig, rund, quadratisch, trapezförmig und/oder gekurvt Reflexionselemente aus beliebigen Materialien verwendet und/oder vorgehalten werden.

Nicht zuletzt ist ein erfindungsgemäßer Blitzlichtreflektor ggf. auch zusammen mit entsprechenden Reflektionselementen relativ leicht und platzsparend zu transportieren. Darüber hinaus bedingt eine solche Anordnung nur einen sehr geringen Lichtverlust und ist die Beleuchtungssituation dadurch verhältnismäßig definiert steuerbar.

Die Erfindung und all Ihre vorteilhaften Ausbildungen sind nicht nur für Blitzlicht an Fotoapparaten, sondern und auch für Video- oder Filmkameras geeignet.

Der Blitzlichtreflektorarm kann auch als sogenannter Schwanenhals, biegsamer, jedoch halbsteifer Arm aus gewendeltem Metallschlauch, ausgebildet werden oder einen solchen aufweisen.

Als Mittel zur Befestigung eines Reflektionselementes sind zahlreiche Anordnungen denkbar. Beispielsweise können hier einfache Klemmen zur Aufnahme von Reflektionselementen beispielsweise aus Karton eingesetzt oder aufwendigere Schraubkonstruktionen vorgesehen werden. Auch können die Mittel zur Befestigung eines Reflektionsmittels derart ausgebildet sein, dass zahlreiche verschiedene Reflektionsmittel aufgenommen werden können.

Der Befestigungsarm und/oder die Mittel zur Befestigung eines Reflektionsmittels können eine Justierung aufweisen mit der der Haltepunkt des Reflektors nach vorne oder hinten verlagert werden kann.

Das Befestigungsmittel des Blitzlichtreflektorarms an der Kamera ist erfindungsgemäß das Stativgewinde .

Vorteilhafterweise wird der Blitzlichtreflektorarm bzw. die Mittel zur Befestigung eines Reflektionselementes so ausgelegt, dass das Reflektionsmittel dreh-, kipp- und/oder schwenkbar ist. Dies bietet die Möglichkeit weitere Freiheit in der Wahl der Belichtungssituation zu ermöglichen. Solche Kipp-, Dreh- oder Schwenkvorrichtungen können an dem Befestigungsmittel, dem Reflektionselement selbst, dem Befestigungsarm oder den Befestigungsmittel für das Reflektionsmittel vorgesehen werden. Es kann beispielsweise auch der Reflektorarm mehrteilig ausgeführt werden und so Verstellmöglichkeiten bieten.

Vorteilhafterweise wird der Blitzlichtreflektorarm so ausgeführt, dass die Mittel zur Befestigung eines Reflektionsmittels höhenverstellbar sind. Dies kann beispielsweise dadurch erreicht werden, dass die Mittel zur Befestigung eines Reflektionselementes an sich in der Höhe variabel sind oder andererseits der Befestigungsarm so ausgeführt ist, dass er eine Höhenverstellung der Befestigungsmittel für das Reflektionselement erlaubt. Dies kann beispielsweise über einen sogenannten Schwanenhals, einen biegsamer, jedoch halbsteifer Arm aus gewendeltem Metallschlauch, erfolgen.

Besonders vorteilhaft ist es, einen erfindungsgemäßen Blitzlichtreflektorarm mit einem oder mehreren Reflektionselementen zu kombinieren. Dabei kann das Reflektionselement fest mit dem Blitzlichtreflektorarm verbunden sein oder der Blitzreflektorarm so ausgeführt sein, dass das Reflektionsmittel austauschbar bzw. lösbar festlegbar ist.

Vorteilhafterweise weist das Reflektionselement eine insbesondere ebene Reflektionsfläche auf. Durch die Verwendung einer ebenen Reflektionsfläche wird das Blitzlicht besonders homogen verteilt. Auch die Verwendung von konvexen und/oder konkaven Reflektionsflächen kann je nach Anforderung vorteilhaft sein.

Weitere mögliche Ausführungen der Erfindung sollen im Fortgang anhand der rein schematischen und nicht beschränkenden Figuren erläutert werden. Sofern keine Abhängigkeiten bezüglich der einzelnen Merkmale aufgeführt werden, können die einzelnen Merkmale auch frei miteinander kombiniert bzw. weggelassen werden. Die Figuren zeigen im Einzelnen:
- Fig. 1: eine herkömmliche Kombination eines auf einem Fotoapparat montierten Blitzgerätes;
- Fig. 2: einen Blitzreflektor montiert an einem Fotoapparat mit Blitzgerät;
- Fig. 3: die Anordnung aus Fig. 2, jedoch in Vogelperspektive; und

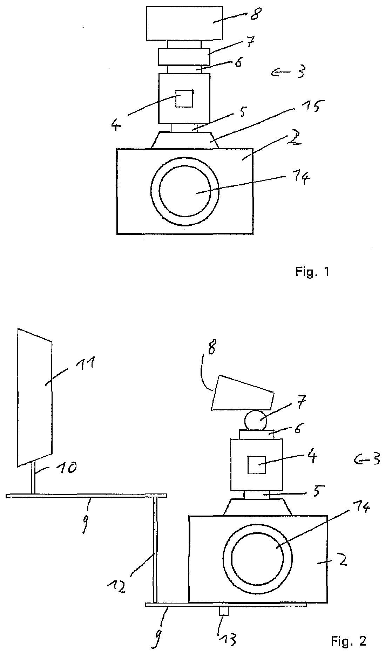

Fig. 1 zeigt einen Fotoapparat 2 mit Objektiv 14 und Blitzschuh 15, auf dem ein Blitzgerät 3 aufgesetzt ist. Das Blitzgerät 3 ist über eine Blitzfuß 5 am Blitzschuh 15 des Fotoapparates 2 befestigt. Das Blitzgerät 3 weist im unteren Teil einen Belichtungssensor 4 auf. Darüber ist eine Drehvorrichtung 6 zum seitlichen Verdrehen des Lampengehäuses 8 angeordnet. Zwischen Lampengehäuse 8 und Drehvorrichtung 6 ist desweiteren eine Kippvorrichtung 7 zum Verkippen des Lampengehäuses 8 angeordnet. In dieser Anordnung blitzt das Blitzgerät 3 aus der Richtung, aus der auch über das Objektiv 14 fotografiert wird.

Fig. 2 zeigt einen Fotoapparat 2 mit darauf angeordnetem Blitzgerät 3. Unten am Fotoapparat 2 über ein dort angeordnetes Stativgewinde und ein Befestigungsmittel 13 ist ein Befestigungsarm 9 angebracht. Der Befestigungsarm 9 weist zwei wagerechte Abschnitte und einen dazwischen angeordneten senkrechten Befestigungsarmabschnitt 12 auf. Am Befestigungsarm 9 ist desweiteren ein Mittel 10 zur Befestigung eines Reflektionselementes 11 angeordnet. Die Mittel zur Befestigung 10 sind so ausgebildet, dass eine Höheneinstellung des Reflektionselements 11 möglich ist.

Auch der senkrechte Befestigungsarmabschnitt 12 dient dazu, das Reflektionselement 11 auf eine geeignete Höhe in Bezug auf das Blitzgerät 3 zu bringen. Zu erkennen ist, dass das Reflektionselement 11 seitlich neben dem Fotoapparat 2 angeordnet ist und so ausgerichtet ist, dass das vom Lampengehäuse 8 ausgestrahlte Blitzlicht über das Reflektionselement 11 in Richtung des zu fotografierenden Objektes geleitet wird. Desweiteren ist zu erkennen, dass trotz des Verdrehens des Lampengehäuses 8 mit Hilfe der Drehvorrichtung 6 gegenüber der Anordnung in Fig. 1 der Belichtungssensor 4 weiterhin nach vorne ausgerichtet ist und relativ nah am Objektiv angeordnet ist, so dass er eine aussagekräftige Lichtmessung durchführen kann. Dies ermöglicht eine optimale Lichtmengensteuerung.

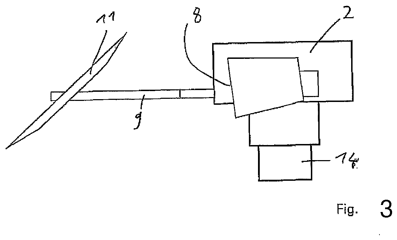

Fig. 3 zeigt eine Anordnung wie in Fig. 2, jedoch in Vogelperspektive. Zu erkennen ist, dass das Reflektionsmittel 11 seitlich neben dem Fotoapparat 2 angeordnet ist und schräg steht. Das Lampengehäuse 8 ist nicht um exakt 90° verdreht, sondern steht ebenfalls leicht schräg, so dass sich eine optimale Ausleuchtung des zu fotografierenden Objektes ergibt. Die Ausrichtung des Reflektionsmittels 11 und des Lampengehäuses lassen sich auf die jeweiligen Bedürfnisse anpassen.

### Bezugszeichen

- 1: System aus Fotoapparat, Blitzgerät und Blitzreflektor
- 2: Fotoapparat
- 3: Blitzgerät
- 4: Belichtungssensor
- 5: Blitzfuß
- 6: Drehvorrichtung
- 7: Kippvorrichtung
- 8: Lampengehäuse
- 9: Befestigungsarm
- 10: Mittel zur Befestigung eines Reflektionselements
- 11: Reflektionselement
- 12: Senkrechter Befestigungsarmabschnitt
- 13: Befestigungsmittel für Stativgewinde
- 14: Objektiv
- 15: Blitzschuh

## Patentansprüche

1. System bestehend aus
- einem Blitzgerät (3) und
- einem Fotoapparat (2) mit einem Blitzschuh (15) zur Befestigung des Blitzgeräts (3), sowie einem Stativgewinde und
- wenigstens einem Blitzlichtreflektorarm,
wobei das Blitzgerät (3) ein Lampengehäuse (8) und einen Belichtungssensor (4) aufweist und, wobei der Blitzschuh (15) so eingerichtet ist, dass das Blitzgerät (3) mittig auf dem Fotoapparat (2) so befestigt ist, dass der Belichtungssensor (4) nach vorne entlang der Kameraachse zeigt und
wobei das Lampengehäuse (8) so eingerichtet ist, dass es sein Licht zu einer ersten Seite des Fotoapparats abgeben kann,
wobei der Blitzlichtreflektorarm ein Befestigungsmittel (13) und einen Befestigungsarm (9, 12) aufweist,
wobei der Befestigungsarm (9, 12) mit dem Befestigungsmittel (13) an dem Stativgewinde befestigt ist und Mittel (10) zur Befestigung eines Reflektionselements (11) am Befestigungsarm (9, 12) aufweist, wobei der Blitzlichtreflektorarm so ausgelegt ist, dass im festgelegten Zustand das an den Mitteln zur Befestigung festgelegte Reflektionsmittel (11) seitlich an der ersten Seite neben dem Fotoapparat (2) positionierbar ist, so dass das Licht über das Reflektionsmittel (11) auf das auszuleuchtende Objekt geleitet wird.

2. System nach einem der vorstehenden Ansprüche, aufweisend mindestens ein Reflektionselement (11).

3. System nach Anspruch 2, **dadurch gekennzeichnet, dass** das Reflektionselement (11) eine insbesondere ebene, konvexe oder konkave Reflektionsfläche aufweist.

4. System nach einem der vorstehenden Ansprüche, **dadurch gekennzeichnet, dass** der Blitzlichtreflektorarm, insbesondere die Mittel (10) zur Befestigung eines Reflektionselements (11) und oder der Befestigungsarm (9, 12), so ausgelegt sind, dass das Reflektionselement (11) drehbar, kipp- und/oder schwenkbar und/oder verlänger- und verkürzbar ist.

5. System nach einem der vorstehenden Ansprüche, **dadurch gekennzeichnet, dass** der Befestigungsarm (9, 12) ein Schwanenhals, ein biegsamer, jedoch halbsteifer Arm insbesondere aus gewendeltem Metallschlauch, ist oder einen als Schwanenhals ausgebildeten Abschnitt aufweist.

6. System nach einem der vorstehenden Ansprüche, **dadurch gekennzeichnet, dass** der Blitzschuh (15) oben auf dem Fotoapparat (2) angeordnet ist.

## Claims

1. A system consisting of
- a flash unit (3) and
- a photographic apparatus (2) with a flash shoe (15) for mounting the flash unit (3), and a tripod socket and
- at least one flash light reflector arm,
the flash unit (3) comprising a lamp housing (8) and a fine exposure sensor (4), and
wherein the flash shoe (15) is arranged so that the flash unit (3) is mounted centrally on the photographic apparatus (2) so that the exposure sensor (4) faces forward along the camera axis and
wherein the lamp housing (8) is arranged so that it can emit its light to a first side of the photographic apparatus, wherein the flashlight reflector arm has a fastening means (13) and a fastening arm (9, 12),
wherein the fastening arm (9, 12) with the fastening means (13) is fixed to the tripod socket and has means (10) for fixing a reflection element (11) to the fastening arm (9, 12), wherein the flash reflector arm is designed so that in the fixed state, the means for fixing reflection means (11) can be positioned laterally on the first side next to the photographic apparatus (2), so that the light is directed to the object to be illuminated via the reflection means (11).

2. A system according to any one of the preceding claims, comprising at least one reflection element (11).

3. A system according to claim 2, **characterised in that** the reflection element (11) has a reflection surface, which is particular flat, convex or concave.

4. A system according to any one of the preceding claims, **characterised in that** the flashlight reflector arm, in particular the means for fixing a reflection element (11) and or/the fastening arm (9, 12), are designed so that the reflection element can rotate, tilt and/or pivot and/or be extended and shortened.

5. A system according to any one of the preceding claims, **characterised in that** the fastening arm (9, 12) is a gooseneck, a flexible, but semi-rigid arm, in particular made of coiled metallic hose or has a section in the form of a gooseneck.

6. A system according to any one of the preceding claims, **characterised in that** the flash shoe (15) is arranged on top of the photographic apparatus (2).

## Revendications

1. Système composé des éléments suivants:
- une unité de flash (3) et
- un appareil photographique (2) avec un sabot de flash (15) pour le montage de l'unité de flash (3), et un filetage pour trépied et
- au moins un bras réflecteur de lumière flash,
l'unité de flash (3) comprenant un boîtier de lampe (8) et un capteur d'exposition fine (4), et
dans lequel le sabot de flash (15) est agencé de telle sorte que l'unité de flash (3) est montée au centre sur l'appareil photographique (2) pour que le capteur d'exposition (4) soit orienté vers l'avant le long de l'axe de caméra et
dans lequel le boîtier de lampe (8) est agencé de manière à pouvoir émettre sa lumière vers un premier côté de l'appareil photographique, dans lequel le bras réflecteur de lampe flash comporte un moyen de fixation (13) et un bras de fixation (9, 12),
dans lequel le bras de fixation (9, 12) avec les moyens de fixation (13) est fixé au filetage de trépied et comporte des moyens (10) pour fixer un élément de réflexion (11) sur le bras de fixation (9, 12),dans lequel le bras de réflecteur de flash est conçu pour qu'à l'état fixe, les moyens de fixation des moyens de réflexion (11) puissent être positionnés latéralement sur le premier côté à côté de l'appareil photographique (2), de sorte que la lumière soit dirigée vers l'objet à éclairer par les moyens de réflexion (11).

2. Système selon l'une quelconque des revendications précédentes, comprenant au moins un élément de réflexion (11).

3. Système selon la revendication 2, **caractérisé en ce que** l'élément de réflexion (11) présente une surface de réflexion, en particulier plane, convexe ou concave.

4. Système selon l'une quelconque des revendications précédentes, **caractérisé en ce que** le bras réflecteur de lampe flash, en particulier les moyens de fixation d'un élément de réflexion (11) et/ou du bras de fixation (9, 12), sont conçus pour que l'élément de réflexion puisse tourner, s'incliner et/ou pivoter et/ou être étendu et raccourci.

5. Système selon l'une quelconque des revendications précédentes, **caractérisé en ce que** le bras de fixation (9, 12) est un col de cygne, un bras flexible, mais semi-rigide, notamment en tuyau métallique enroulé ou présente une section en forme de col de cygne.

6. Système selon l'une quelconque des revendications précédentes, **caractérisé en ce que** le sabot de flash (15) est disposé sur le dessus de l'appareil photographique (2).
